# EUROPEAN PATENT SPECIFICATION

(11) **EP 4 056 603 B1**
(45) Date of publication and mention of the grant of the patent: **03.12.2025**
(21) Application number: 21161289.0
(22) Date of filing: 08.03.2021
(51) Int. Cl.: C08F 220/14, C08L 33/06, C08L 33/12, C08L 83/10, C08L 35/06

(54) **COMPOSITION OF METHACRYLATE (CO)POLYMER AND POLY(CARBONATE-SILOXANE) BLOCKCOPOLYMER AND ITS USE IN SCRATCH AND IMPACT RESITANT ARTICLES**
ZUSAMMENSETZUNG VON METHACRYLAT-(CO)POLYMER UND POLY(CARBONAT-SILOXAN) BLOCKCOPOLYMER UND IHRE VERWENDUNG IN KRATZ- UND STOSSBESTÄNDIGEN ARTIKELN
COMPOSITION D'UN (CO)POLYMÈRE DE MÉTHACRYLAT ET D'UN BLOCKCOPOLYMÈRE POLY(CARBONATE-SILOXANE) ET SON UTILISATION DANS DES ARTICLES RÉSISTANTS AUX RAYURES ET AUX CHOCS

(43) Date of publication of application: 14.09.2022
(73) Proprietor: SHPP Global Technologies B.V., 4612 PX Bergen op Zoom (NL)
(72) Inventor: Di Lena, Fabio, 4612 Bergen op Zoom (NL); Assink, Roland Sebastian, 4612 Bergen op Zoom (NL)
(74) Representative: Balder IP Law, S.L.

(56) References cited:
- EP-A1- 3 643 749
- EP-A1- 3 730 549
- WO-A1-2005/108486
- US-A1- 2013 203 918
- BRANNOCK G R ET AL: "BLENDS OF STYRENE/MALEIC ANHYDRIDE COPOLYMERS WITH POLYMETHACRYLATES", JOURNAL OF POLYMER SCIENCE PART B: POLYMER PHYSICS, JOHN WILEY & SONS, INC, US, vol. 29, no. 4, 30 March 1991 (1991-03-30), pages 413 - 429, XP000230166, ISSN: 0887-6266, DOI: 10.1002/POLB.1991.090290404

## Description

### BACKGROUND

This disclosure relates to thermoplastic compositions including methacrylate polymers and poly(carbonate-siloxane)s, as well as methods for the manufacture of the compositions, uses, and articles containing the compositions.

Poly(methyl methacrylate) (PMMA) is useful for scratch resistant and transparent or high gloss thermoplastic compositions. However, due to its low impact strength PMMA is not generally well suited for demanding applications such as automotive components or consumer electronics (e.g., consumer electronic housings). Polycarbonate (PC) has excellent impact strength and transparency but tends to lack scratch-resistant properties.

Efforts to improve scratch resistance include, for example, hard-coating the compositions or inclusion of anti-scratch additives into the compositions. These approaches may not be desirable in all applications. For example, in the case of hard-coating, an expensive additional processing step is introduced to the manufacturing process. Addition of impact modifiers has been explored to improve impact strength; however, impact modifiers can negatively affect scratch visibility (e.g., by making scratches appear whiter).

EP 3730549 discloses scratch resistant compositions which are based on PMMA and a poly(carbonate-organosiloxane) copolymer (PC-POS) that comprises 25-45 wt.% polysiloxane blocks. EP 3643749 discloses a thermoplastic composition comprising 5-70 wt.% PMMA, 15-50 wt.% of a first PC-POS having a 35-45 wt.% siloxane content, and 10-45 wt.% of a second PC-POS having a 15-25 wt.% or 4-8 wt.% siloxane content, wherein the composition may further comprise one or more additional polymers selected from the group consisting of low density polyethylene, poly(ethylene-propylene), styrene-butadiene rubber, polybutadiene, poly(butyl acrylate), silicone rubber, polyamide, polyaramide, polycarbonate, polyester, polyimide, polyetherimide, polystyrene, polyurethane, blends thereof, copolymers thereof and combinations thereof. US 2013/0203918 relates to weathering-resistant, colored moldings made of poly(alkyl) (meth)acrylate with certain gloss and resistance to mechanical influences acting on the surface of the molding, in particular with certain wipe resistance and improved scratch resistance, and also to molding compositions for producing the same, said compositions comprising a PMMA matrix material and specific polysiloxanes.

Accordingly, there remains a continuing need in the art for scratch-resistant compositions having improved impact strength that do not require a hard-coating or scratch-resistant additives. It would be a further advantage to provide a composition having good thermal properties.

### SUMMARY

A composition comprises 55 to 90 weight percent of a methacrylate copolymer comprising repeating units derived from 50 to 99 weight percent, based on the total weight of the copolymer, of a C₁₋₁₀ alkyl methacrylate; 0.5 to 20 weight percent, based on the total weight of the copolymer, of maleic anhydride, fumaric anhydride, or maleimide; and 0.5 to 40 weight percent, based on the total weight of the copolymer, of a substituted or unsubstituted alkenyl aromatic monomer; and 10 to 30 weight percent of a poly(carbonate-siloxane) having a siloxane content of 30 to 70 weight percent, preferably 35 to 65 weight percent, based on the total weight of the poly(carbonate-siloxane); wherein the weight percent of each component is based on the total weight of the composition.

A method of making the composition comprises melt-mixing the components of the composition, and, optionally, extruding the composition.

An article comprises the composition.

The above described and other features are exemplified by the following detailed description.

### DETAILED DESCRIPTION

Provided herein is a composition having a combination of good scratch resistance, impact strength, and thermal resistance. The compositions include particular amounts of an alkyl methacrylate-containing polymer or blend thereof, and a poly(carbonate-siloxane).

Accordingly, a composition represents an aspect of the present disclosure. The composition comprises a methacrylate copolymer comprising repeating units derived from a C₁₋₁₀ alkyl methacrylate; maleic anhydride, fumaric anhydride, maleimide, or a combination thereof; and a substituted or unsubstituted alkenyl aromatic monomer.

The alkyl methacrylate-containing polymer of the composition comprises the methacrylate copolymer comprising repeating units derived from a C₁₋₁₀ alkyl methacrylate; maleic anhydride, fumaric anhydride, maleimide, or a combination thereof; and a substituted or unsubstituted alkenyl aromatic monomer.

The C₁₋₁₀ alkyl methacrylate can comprise, for example, methyl methacrylate, ethyl methacrylate, propyl methacrylate, n-butyl methacrylate, tert-butyl methacrylate, pentyl methacrylate, or 2-ethylhexyl methacrylate. In an aspect, the C₁₋₁₀ alkyl methacrylate of the copolymer is a C₁₋₆ alkyl methacrylate, preferably methyl methacrylate.

The substituted or unsubstituted alkenyl aromatic monomer can be a monovinylaromatic monomer containing a single or condensed aromatic ring structure, such as styrene, vinyl naphthalene and vinyl anthracene. In an aspect the substituted or unsubstituted alkenyl aromatic monomer is of the formula 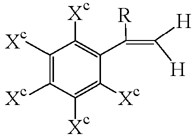 wherein each X^{c} is independently hydrogen, C₁₋₁₂ alkyl, C₃₋₁₂ cycloalkyl, C₆₋₁₂ aryl, C₇₋₁₂ aralkyl, C₇₋₁₂ alkylaryl, C₁₋₁₂ alkoxy, C₃₋₁₂ cycloalkoxy, C₆₋₁₂ aryloxy, chloro, bromo, or hydroxy, and R is hydrogen, C₁₋₅ alkyl, bromo, or chloro. monovinylaromatic monomers that can be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, or a combination thereof. Styrene or alpha-methylstyrene can be used as monomers copolymerizable with the conjugated diene monomer.

The C₁₋₁₀ alkyl methacrylate is present in the methacrylate copolymer in an amount of 50 to 99 weight percent, or 65 to 95 weight percent, or 70 to 80 weight percent, each based on the total weight of the copolymer. In an aspect, the maleic anhydride, fumaric anhydride, or maleimide is present in the methacrylate copolymer in an amount of 0.5 to 20 weight percent, or 1 to 15 weight percent, or 5 to 15 weight percent, each based on the total weight of the copolymer. In an aspect, the methacrylate copolymer comprises maleic anhydride. In an aspect, the substituted or unsubstituted alkenyl aromatic monomer can be present in an amount of 0.5 to 40 weight percent, or 1 to 30 weight percent, or 5 to 25 weight percent of 10 to 20 weight percent, each based on the total weight of the methacrylate copolymer. In an aspect, the substituted or unsubstituted alkenyl aromatic monomer comprises styrene or alpha-methyl styrene.

The methacrylate copolymer can have a weight average molecular weight of 20,000 to 100,000 grams per mole. Molecular weight can be determined by gel permeation chromatography relative to poly(methyl methacrylate) standards.

The methacrylate copolymer can be prepared using methods that are generally known. For example, the monomer constituents can be polymerized through a radical polymerization conducted in bulk, in solution, or as a suspension polymerization. Copolymers are available as PLEXIGLAS HW55 (comprising methyl methacrylate-styrene-maleic anhydride) or PLEC 8707 (comprising methyl methacrylate-alpha-methyl styrene-maleic anhydride) both available from Röhm GmbH.

The methacrylate copolymer is present in the composition in an amount of 55 to 90 weight percent, based on the total weight of the composition. Within this range, the methacrylate copolymer can be present in an amount of 60 to 85 weight percent, or 60 to 80 weight percent, or 65 to 80 weight percent, or 70 to 80 weight percent, each based on the total weight of the composition.

In addition to the methacrylate copolymer the composition further comprises a poly(carbonate-siloxane). The poly(carbonate-siloxane) comprises polycarbonate blocks comprising repeating units according to Formula (1) 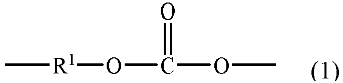 and polysiloxane blocks. In Formula (1), at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ can be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an aspect, one atom separates A¹ from A². Preferably, each R¹ can be derived from a bisphenol of formula (3) 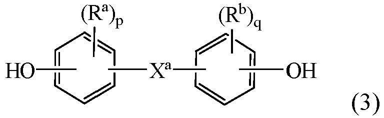 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₆₀ organic group. The organic bridging group can be cyclic or acyclic, aromatic, or non-aromatic, and can further comprise heteroatoms such as halogens, oxygen, nitrogen, sulfur, silicon, or phosphorous. The C₁₋₆₀ organic group can be disposed such that the C₆ arylene groups connected thereto are each connected to a common alkylidene carbon or to different carbons of the C₁₋₆₀ organic bridging group. In an aspect, p and q are each 1, and R^{a} and R^{b} are each a C₁₋₃ alkyl group, preferably methyl, disposed meta to the hydroxy group on each arylene group.

The polysiloxane blocks comprise repeating diorganosiloxane units as in formula (4) 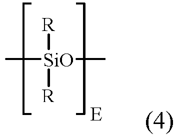 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

The value of E in formula (4) can vary widely depending on the type and relative amount of each component in the moldable composition, the desired properties of the composition, and like considerations. Generally, E has an average value of 2 to 1,000, preferably 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it can be desirable to use a relatively larger amount of the poly(carbonate-siloxane). Conversely, where E is of a higher value, e.g., greater than 40, a relatively lower amount of the poly(carbonate-siloxane) can be used. A combination of a first and a second (or more) poly(carbonate-siloxane)s can be used, wherein the average value of E of the first copolymer is less than the average value of E of the second copolymer.

In an aspect, the polysiloxane blocks are of formula (5) 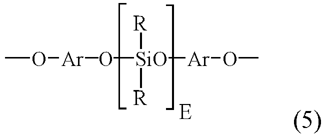 wherein E and R are as defined in formula (4); each R can be the same or different, and is as defined above; and Ar can be the same or different, and is a substituted or unsubstituted C₆₋₃₀ arylene, wherein the bonds are directly connected to an aromatic moiety. Ar groups in formula (5) can be derived from a C₆₋₃₀ dihydroxyarylene compound, for example a dihydroxyarylene compound of formula (3) or an aromatic dihydroxy compound of formula (6) 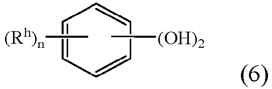 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. The halogen is usually bromine. Particular dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, polysiloxane blocks are of formula (7) 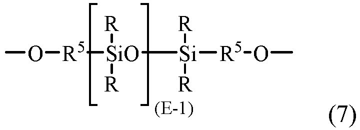 wherein R and E are as described above, and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (8): 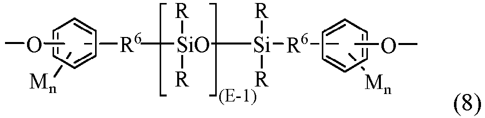 wherein R and E are as defined above. R⁶ in formula (8) is a divalent C₂₋₈ aliphatic group. Each M in formula (8) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formula 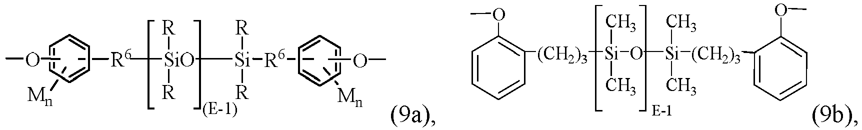 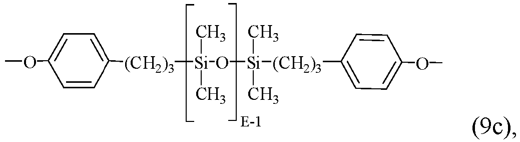 or a combination thereof, wherein E has an average value of 2 to 200, 2 to 125, 5 to 125, 5 to 100, 5 to 50, 20 to 80, or 5 to 20.

Blocks of formula (9) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane)s can then be manufactured, for example, by the synthetic procedure of European Patent Application Publication No. 0 524 731 A1 of Hoover, page 5, Preparation 2.

Transparent poly(carbonate-siloxane)s comprise carbonate units (1) derived from bisphenol A, and repeating siloxane units (9a), (9b), (9c), or a combination thereof (preferably of formula 9a), wherein E has an average value of 4 to 50, 4 to 15, preferably 5 to 15, more preferably 6 to 15, and still more preferably 7 to 10. The transparent copolymers can be manufactured using one or both of the tube reactor processes described in U.S. Patent Application No. 2004/0039145A1 or the process described in U.S. Patent No. 6,723,864 can be used to synthesize the poly(carbonate-siloxane)s.

The poly(carbonate-siloxane) has a siloxane content of 30 to 70 wt%, based on the total weight of the poly(carbonate-siloxane). Within this range, the poly(carbonate-siloxane) can have a siloxane content of greater than 30 to 70 weight percent, or 35 to 70 weight percent, or 35 to 65 weight percent. As used herein, "siloxane content" of a poly(carbonate-siloxane) refers to the content of siloxane units based on the total weight of the poly(carbonate-siloxane).

In an aspect, the poly(carbonate-siloxane) can have a weight average molecular weight of 17,000 to 50,000 g/mol. Within this range, the weight average molecular weight can be 17,000 to 45,000 g/mol, or 20,000 to 45,000 g/mol, or 30,000 to 45,000 g/mol, or 32,000 to 36,000 g/mol, or 30,000 to 45,000 g/mol, or 32,000 to 45,000 g/mol, or 35,000 to 45,000 g/mol, or 35,000 to 40,000 g/mol, or 32,000 to 40,000 g/mol. In an aspect, the poly(carbonate-siloxane) can have a weight average molecular weight of 26,000 to 45,000 g/mol, or 30,000 to 45,000 g/mol, or 35,000 to 40,000 g/mol. The weight average molecular weight can be determined by gel permeation chromatography using a crosslinked styrene-divinyl benzene column, at a sample concentration of 1 milligram per milliliter, and as calibrated using polystyrene standards and calculated for polycarbonate.

The poly(carbonate-siloxane)s can have a melt volume flow rate, measured at 300 °C/1.2 kg, of 1 to 50 cubic centimeters per 10 minutes (cc/10 min), preferably 2 to 30 cc/10 min. Combinations of the poly(carbonate-siloxane)s of different flow properties can be used to achieve the overall desired flow property.

The poly(carbonate-siloxane) can be present in the composition in an amount effective to provide a total siloxane content of 1 to 25 weight percent, or 3 to 22 weight percent or 3 to 15 weight percent, or 3 to 10 weight percent, or 5 to 10 weight percent, each based on the total weight of the composition.

In an aspect, the composition can have a total siloxane content of 6 to 10 weight percent, and the weight average molecular weight of the poly(carbonate-siloxane) can be greater than 21,000 g/mol. In an aspect, the composition can have a total siloxane content that is 6 to 10 weight percent, and the weight average molecular weight of the poly(carbonate-siloxane) can be greater than 25,000 to less than 45,000 g/mol. In an aspect, the composition can have a total siloxane content that is 6 to 10 weight percent, and the weight average molecular weight of the poly(carbonate-siloxane) can be greater than 30,000 to less than 40,000 g/mol.

The poly(carbonate-siloxane) can be present in the composition in an amount of 10 to 30 weight percent, based on the total weight of the composition. Within this range, the poly(carbonate-siloxane) can be present in an amount of 12 to 25 weight percent, or 15 to 25 weight percent, or 20 to 30 weight percent, or 20 to 25 weight percent, each based on the total weight of the composition.

In an aspect, the composition comprises less than or equal to 5 wt% or less than or equal to 1 wt%, or less than or equal to 0.1 wt% of an auxiliary poly(carbonate-siloxane) copolymer comprising 70 to 98 wt%, more preferably 75 to 97 wt% of carbonate units and less than 30 wt%, or 2 to less than 30 wt%, or 3 to 25 wt% siloxane units. In an aspect, an auxiliary poly(carbonate-siloxane) copolymer can be excluded from the composition.

In an aspect, one or more of the components of the composition can be derived from post-consumer recycled or post-industrial recycled materials or can be produced from at least one monomer derived from bio-based or plastic waste feedstock. For example, one or both of the alkyl methacrylate-containing polymer and the poly(carbonate-siloxane) can be derived from post-consumer recycled or post-industrial recycled materials or can be produced from at least one monomer derived from bio-based or plastic waste feedstock.

In addition to the alkyl methacrylate-containing polymer and the poly(carbonate-siloxane), the composition can optionally further comprise an additive composition. The additive composition can include various additives ordinarily incorporated into polymer compositions of this type, with the proviso that the additive(s) are selected so as to not significantly adversely affect the desired properties of the thermoplastic composition, in particular scratch resistance and impact strength. Such additives can be mixed at a suitable time during the mixing of the components for forming the composition. Additives include processing aids, fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardant, hydrostabilizers, epoxy resins, and anti-drip agents. A combination of additives can be used, for example a combination of one or more of a hydrostabilizer, an epoxy resin, an anti-drip agent, a processing aid, a heat stabilizer, an ultraviolet light stabilizer, a colorant, an inorganic filler, preferably a clay. In general, the additives are used in the amounts generally known to be effective. For example, the total amount of the additives (other than any impact modifier, filler, or reinforcing agents) can be 0.1 to 10 weight percent, or 0.2 to 8 weight percent, or 0.2 to 5 weight percent, or 0.2 to 2 weight percent, or 0.2 to 1 weight percent, based on the total weight of the composition.

In an aspect, the composition can optionally further comprise a polyolefin such as low density polyethylene (LDPE). LDPE is a branched polyethylene. LDPE generally has decreased crystallinity and lower density. LDPE can be prepared at high temperatures and pressures, which results in complex branched molecular structures. The amount of branching and the density can be controlled by the polymerization conditions. LLDPE is prepared by using an α-olefin co-monomer during polymerization. Hence branching is introduced in a controlled manner, and the branch chain length is uniform. In general, the co-monomers comprise 1-butene, 1-hexene, 1-octene, and 4-methyl-1-pentene (4M1P).

When present, the low density polyethylene can be included in the composition in an amount of 1 to 5 weight percent. Within this range, the low density polyethylene can be present in an amount of 1 to 4.5 weight percent, or 1 to 4 weight percent, or 1 to 3.5 weight percent, or greater than 1 to 3.5 weight percent, or 1.5 to 3.5 weight percent, each based on the total weight of the composition.

In an aspect, the composition can optionally further comprise an impact modifier. Suitable impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers can be used.

A specific type of impact modifier is an elastomer-modified graft copolymer comprising (i) an elastomeric (i.e., rubbery) polymer substrate having a Tg less than 10°C, more preferably less than -10°C, or more preferably -40° to -80°C, and (ii) a rigid polymeric superstrate grafted to the elastomeric polymer substrate. Materials suitable for use as the elastomeric phase include, for example, conjugated diene rubbers, for example polybutadiene and polyisoprene; copolymers of a conjugated diene with less than 50 wt.% of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric C₁₋₈ alkyl (meth)acrylates; elastomeric copolymers of C₁₋₈ alkyl (meth)acrylates with butadiene or styrene; or combinations thereof. Materials suitable for use as the rigid phase include, for example, monovinyl aromatic monomers such as styrene and alpha-methyl styrene, and monovinylic monomers such as acrylonitrile, acrylic acid, methacrylic acid, and the C₁₋₆ esters of acrylic acid and methacrylic acid, preferably methyl methacrylate.

In an aspect, exemplary impact modifiers can include those based on acrylic copolymers. For example, an acrylic copolymer-containing impact modifier can comprise acrylonitrile-butadiene-styrene polymer (ABS) such as bulk polymerized ABS (BABS), an acrylonitrile-styrene-butyl acrylate (ASA) polymer, a methyl methacrylate-acrylonitrile-butadiene-styrene (MABS) polymer, a methyl methacrylate-butadiene-styrene (MBS) polymer, and an acrylonitrile-ethylene-propylene-diene-styrene (AES) polymer, or a combination thereof.

In an aspect, the impact modifier can be a multilayer impact modifier comprising a core and one or more shells. As described above, the core can be elastomeric and the shell can be rigid. In an aspect, the multilayer impact modifier can comprise butyl acrylate as a rubber component. In an aspect, the multilayer impact modifier can comprise methyl methacrylate polymer as the rigid component. In an aspect, the multilayer impact modifier can have a core-shell-shell structure in which a core (C) is surrounded by a first shell (S1) which is in turn surrounded by a second shell (S2). The core and first shell (e.g., the inner shell) can be elastomeric and the second shell (e.g., the outer shell) can be rigid. In an aspect, the weight ratio of C:(S1+S2) can be 10:90 to 40:60. The core and the first shell can contain an elastomeric (i.e., rubbery) polymer phase having a glass transition temperature (Tg) of less than 10°C, or less than -10°C, or -40 to -80°C. The second shell can contain a rigid polymeric superstrate grafted to the elastomer phase. In an aspect, the core can contain a first butyl acrylate polymer. In an aspect, the first shell can contain a second butyl acrylate polymer. In an aspect, the second shell can contain at least 50 weight percent of a methyl methacrylate polymer based on the total weight of the second shell. In an aspect, the multilayer impact modifier can have a particle size of 100 to 1000 nanometers (nm), for example 150 to 500 nm, or 175 to 250 nm. In an aspect, the number average particle diameter of the multilayer impact modifier can be 30 to 400 nm. Particle size can be determined by methods which are generally known, for example light scattering methods.

In an aspect, the core of the multilayer impact modifier can comprise a core polymer comprising 40 to 99.9 weight percent, or 55 to 90 weight percent of alkyl methacrylate repeat units, alkyl acrylate repeat units or styrenic repeat units; 0 to 59.9 weight percent of a copolymerizable monomer other than the alkyl methacrylate, alkyl acrylate, or styrenic repeat units; and 0.1 to 5 weight percent of a polyfunctional monomer, based on the total weight of the core. In an aspect, the core polymer can be a butyl acrylate polymer.

In an aspect, the first shell of the multilayer impact modifier can comprise a first shell polymer comprising 50 to 99.9 weight percent, preferably 70 to 99 weight percent of a (C₂₋₈ alkyl) acrylate; 0 to 49.9 weight percent, preferably 0 to 29 weight percent of a copolymerizable vinyl monomer that is not an alkyl acrylate; and 0.1 to 10 weight percent, preferably 0.1 to 5 weight percent of a polyfunctional monomer, based on the total weight of the first shell. Polymerization of the monomers for the first shell in the presence of the core polymers can result in the core polymer being mainly distributed at the center portion of the impact modifier. In an aspect, the first shell polymer can be a butyl acrylate polymer.

In an aspect, the second shell of the multilayer impact modifier can be a graft component. In an aspect, second shell can contain homopolymer or a copolymer derived from a styrenic compound, (meth)acrylonitrile, (meth)acrylic acid, a (C₁₋₆ alkyl) (meth)acrylate, or a combination thereof. In an aspect, the second shell can contain, 50 to 100 weight percent, preferably 80 to 100 weight percent of methyl methacrylate repeat units; and 0 to 50 weight percent, preferably 0 to 20 weight percent of a copolymerizable vinyl monomer other than the methyl methacrylate, based on the total weight of the outer shell. In an aspect, the outer shell polymer can be a methyl methacrylate polymer.

In an aspect, the multilayer impact modifier can have a refractive index of 1.45 to 1.55, or 1.47 to 1.51, or about 1.49, or at least any one of, equal to any one of, or between any two of 1.45, 1.46, 1.47, 1.48, 1.49, 1.5, 1.50, 1.51, 1.52, 1.53, 1.54, and 1.55. In an aspect, the ratio of refractive indexes of the poly(methyl methacrylate) and the multilayer impact modifier can be 1.05:1 to 1:1.05.

In an aspect, the rubber content of the impact modifier can be 30 to 90 weight percent. Impact modifiers can be as described, for example, in U.S. Publication No. 2013/0184375. In an aspect, the impact modifier can be a powder product with having a multi-layer structure which comprises butyl acrylate as a rubber component, such as KANE ACE M-210 available from Kaneka.

When present, the impact modifier can be included in the composition in an amount of 5 to 35 weight percent, based on the total weight of the composition. Within this range, the impact modifier can be present in an amount of at least 10 weight percent, at least 15 weight percent, at least 20 weight percent, or at least 25 weight percent. Also within this range, the impact modifier can be present in an amount of at most 30 weight percent, or at most 25 weight percent, or at most 20 weight percent, or at most 15 weight percent.

The composition can optionally exclude other components not specifically described here. For example, the composition can exclude thermoplastic polymers other than the (C₁₋₁₀ alkyl) methacrylate copolymer, and the poly(carbonate-siloxane). The composition can optionally minimize or exclude poly(methyl methacrylate) homopolymer (e.g., wherein PMMA is present in an amount of no more than 5 weight percent, or no more than 1 weight percent, or no more than 0.5 weight percent, or no more than 0.1 weight percent). The composition can optionally exclude impact modifiers.

The composition provided herein can exhibit good scratch resistance, impact strength and thermal resistance when a particular combination of the acrylate-containing polymer and the poly(carbonate-siloxane) are present in the composition, each in particular amounts.

A molded sample of the composition can exhibit one or more of improved scratch resistance, impact strength and thermal resistance. Without wishing to be bound by theory, it is believed that the unexpected combination of scratch resistance, impact strength, and thermal resistance is achieved by the careful selection of the components of the composition including the selection of weight percent of siloxane units in the poly(carbonate-siloxane), as well as careful selection of the acrylate-containing copolymer.

In an aspect, a molded sample of the composition can exhibit good impact strength. For example, a molded sample of the composition can exhibit a notched Charpy impact strength of greater than 5 kJ/m², preferably 7 kJ/m² to 12 kJ/m² at 23 °C, 4.2 J, as measured in accordance with ISO 179/1. A molded sample of the composition can exhibit a notched Izod impact strength of greater than 7 kJ/m², preferably 8 kJ/m² to 11 kJ/m² at 23 °C, 2.75 J, as measured in accordance with ISO 180,

A molded sample of the composition can also exhibit good surface hardness and scratch resistance. For example, a molded sample of the composition can exhibit a hardness of greater than 400 N/mm², preferably 430 N/mm² to 550 N/mm², as measured in accordance with the Erichsen scratch hardness test at a force of 2 Newton (N). The composition can have a pencil hardness of at least H, as specified by D3363-92A.

The composition can exhibit a heat deflection temperature (HDT) of at least 90°C, or 90 to 125°C, as determined according to ISO 75 on a sample plaque of 4.00 mm thickness at 0 1.8 MPa.

In an aspect, a molded same of the composition can exhibit a notched Charpy impact strength of greater than 5 kJ/m², preferably 7 kJ/m² to 12 kJ/m² at 23 °C, 4.2 J, as measured in accordance with ISO 179/1; and a notched Izod impact strength of greater than 7 kJ/m², preferably 8 kJ/m² to 11 kJ/m² at 23 °C, 2.75 J, as measured in accordance with ISO 180; and a hardness of greater than 400 N/mm², preferably 430 N/mm² to 550 N/mm², as measured in accordance with the Erichsen scratch hardness test at a force of 2 Newton (N); and a pencil hardness as specified by D3363 - 92A of at least H.

In an aspect, a molded same of the composition can exhibit a notched Charpy impact strength of greater than 5 kJ/m², preferably 7 kJ/m² to 12 kJ/m² at 23 °C, 4.2 J, as measured in accordance with ISO 179/1; and a notched Izod impact strength of greater than 7 kJ/m², preferably 8 kJ/m² to 11 kJ/m² at 23 °C, 2.75 J, as measured in accordance with ISO 180; and a hardness of greater than 400 N/mm², preferably 430 N/mm² to 550 N/mm², as measured in accordance with the Erichsen scratch hardness test at a force of 2 Newton (N); and a pencil hardness as specified by D3363 - 92A of at least H; and a heat deflection temperature (HDT) of at least 90 °C, or 90 to 125 °C, as determined according to ISO 75 on a sample plaque of 4.00 mm thickness at 0 1.8 MPa.

In an aspect, the composition can comprise 70 to 80 weight percent of the (C₁₋₁₀ alkyl) methacrylate copolymer; and 20 to 30 weight percent of the poly(carbonate-siloxane). The (C₁₋₁₀ alkyl) methacrylate copolymer can comprise repeating units derived from 70 to 80 weight percent methyl methacrylate; 10 to 20 weight percent styrene; and 5 to 15 weight percent maleic anhydride; wherein weight percent is based on the total weight of the copolymer. The poly(carbonate-siloxane) comprises bisphenol A carbonate repeating units and poly(dimethyl siloxane) repeating units. The poly(carbonate-siloxane) has a weight average molecular weight of 25,000 to 45,000 g/mol. The poly(carbonate-siloxane) has a siloxane content of 35 to 65 weight percent based on the total weight of the poly(carbonate-siloxane). A molded sample of the composition exhibits a notched Charpy impact strength of greater than 5 kJ/m², preferably 7 kJ/m² to 12 kJ/m² at 23 °C, 4.2 J, as measured in accordance with ISO 179/1; and a notched Izod impact strength of greater than 7 kJ/m², preferably 8 kJ/m² to 11 kJ/m² at 23 °C, 2.75 J, as measured in accordance with ISO 180; and a hardness of greater than 400 N/mm², preferably 430 N/mm² to 550 N/mm², as measured in accordance with the Erichsen scratch hardness test at a force of 2 Newton (N); and a pencil hardness as specified by D3363 - 92A of at least H. A molded sample of the composition can further exhibit a heat deflection temperature (HDT) of at least 90°C, or 90 to 125°C, as determined according to ISO 75 on a sample plaque of 4.00 mm thickness at 0 1.8 MPa.

The composition can be manufactured by various methods known in the art. For example, the acrylate-containing polymer and poly(carbonate-siloxane) and other optional components can be first blended, optionally with any fillers, in a high-speed mixer or by hand-mixing. The blend is then fed into the throat of a twin-screw extruder via a hopper. Alternatively, at least one of the components can be incorporated into the composition by feeding it directly into the extruder at the through and/or downstream through a side stuffer, or by being compounded into a masterbatch with a desired polymer and fed into the extruder. The extruder is generally operated at a temperature at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

Shaped, formed, casted, or molded articles comprising the composition are also provided. The composition can be molded into shaped articles by a variety of methods, such as injection molding, extrusion, rotational molding, blow molding, and thermoforming. The article can be a molded article, a thermoformed article, an extruded film, an extruded sheet, a honeycomb structure, one or more layers of a multi-layer article, a substrate for a coated article, or a substrate for a metallized article.

Articles comprising the composition can be used in various consumer products. In an aspect, the article can be an automotive component. In an aspect, the article can be a consumer electronic component, for example a housing for a consumer electronic device.

Articles can include, but are not limited to, exterior automobile components (e.g., grill, mirror housing, pillar, spoiler, logo, roof rail, bezel, trim, fender), interior automobile components (e.g., decorative parts, electronic housings, instrument panel components, navigation system, housing frames), storage boxes, a personal equipment part, a home appliance component, furniture, appliance housings (e.g., robot cleaners, drones), and consumer electronics devices (e.g., device housings or components for laptops, phones, tablets, batteries, wireless charging, AR/VR goggles).

In an aspect the article can be an automotive bumper, an automotive exterior component, an automobile mirror housing, an automobile wheel cover, an automobile instrument panel or trim, an automobile glove box, an automobile door hardware or other interior trim, an automobile exterior light, an automobile part within the engine compartment, an agricultural tractor or device part, a window or a component thereof, a construction equipment vehicle or device part, a marine or personal water craft part, an all-terrain vehicle or all-terrain vehicle part, plumbing equipment, a valve or pump, an air conditioning heating or cooling part, a furnace or heat pump part, a computer housing, a computer housing or business machine housing or part, a housing or part for monitors, a computer router, a desk top printer, a large office/industrial printer, an electronics part, a projector part, an electronic display part, a copier part, a scanner part, an electronic printer toner cartridge, a handheld electronic device housing, a housing for a hand-held device, a hair drier, an iron, a coffee maker, a toaster, a washing machine or washing machine part, a microwave, an oven, a power tool, an electric component, an electric enclosure, a lighting part, a component for a lighting fixture, a dental instrument, a medical instrument, a medical or dental lighting part, an aircraft part, a train or rail part, a seating component, a sidewall, a ceiling part, cookware, a medical instrument tray, an animal cage, fibers, a laser welded medical device, fiber optics, a lens (auto and non-auto), a cell phone part, a greenhouse component, a sun room component, a fire helmet, a safety shield, safety glasses, a gas pump part, a humidifier housing, a thermostat control housing, an air conditioner drain pan, an outdoor cabinet, a telecom enclosure or infrastructure, a Simple Network Detection System (SNIDS) device, a network interface device, a smoke detector, a component or device in a plenum space, a medical scanner, X-ray equipment, a component for a medical application or a device, an electrical box or enclosure, and an electrical connector, a construction or agricultural equipment, and a turbine blade.

In an aspect the article can be a component of an aircraft interior or a train interior, an access panel, access door, air flow regulator, air gasper, air grille, arm rest, baggage storage door, balcony component, cabinet wall, ceiling panel, door pull, door handle, duct housing, enclosure for an electronic device, equipment housing, equipment panel, floor panel, food cart, food tray, galley surface, handle, housing for television, light panel, magazine rack, telephone housing, partition, part for trolley cart, seat back, seat component, railing component, seat housing, shelve, side wall, speaker housing, storage compartment, storage housing, toilet seat, tray table, tray, trim panel, window molding, window slide, a balcony component, baluster, ceiling panel, cover for a life vest, cover for a storage bin, dust cover for a window, layer of an electrochromic device, lens for a television, electronic display, gauge, or instrument panel, light cover, light diffuser, light tube, light pipes, mirror, partition, railing, refrigerator door, shower door, sink bowl, trolley cart container, trolley cart side panel, or window

This disclosure is further illustrated by the following examples, which are nonlimiting.

### EXAMPLES

Materials used for the following examples are provided in Table 1.

**Table 1**

| Component | Description | Supplier |
|---|---|---|
| PCSi | Poly(carbonate-siloxane) having a siloxane content of 40 weight percent, average PDMS block length of 45 units, having a Mw of 37,000 to 38,000 grams per mole as determined by gel permeation chromatography calibrated using polystyrene standards and calculated for polycarbonate produced by interfacial polymerization and endcapped with p-cumylphenol | SABIC |
| HHPMMA-1 | High heat poly(methyl methacrylate) copolymer derived from methyl methacrylate, styrene, and maleic anhydride, available as PLEXIGLAS Heatresist HW55 | Röhm GmbH |
| HHPMMA-2 | High heat acrylic polymer available as PLEXIGLAS Heatresist FT15 | Röhm GmbH |
| HHPMMA-3 | High heat poly(n-methyl acrylamide) available as PLEXIMID TT50 | Röhm GmbH |

The compositions of the following examples were prepared by blending the components together and extruding on a 37 mm twin-screw extruder. The compositions were subsequently injection molded at a temperature of 210 to 240°C, though it will be recognized by one skilled in the art that the method is not limited to these temperatures. Extrusion and molding conditions are shown in Tables 2 and 3, respectively.

**Table 2**

| Description | | Unit | Quantity |
|---|---|---|---|
| Drying time | | h | 6 |
| Drying temp | | °C | 75 |
| Hopper temp | | °C | 40 |
| Calibrator temp | | °C | 40-60 |
| Zone 1 temp | | °C | 180-200 |
| Zone 2 temp | | °C | 200-220 |
| Zone 3 temp | | °C | 230-250 |
| Zone 4 temp | | °C | 250-260 |
| Zone 9 temp | | °C | 255-260 |
| Screw speed | | a.u. | 300 |

**Table 3**

| Description | | Unit | Quantity |
|---|---|---|---|
| | Drying time | h | 6 |
| | Drying temp | °C | 75 |
| Hopper temp | | °C | 40 |
| Zone 1 temp | | °C | 210-220 |
| Zone 2 temp | | °C | 220-230 |
| Zone 3 temp | | °C | 230-240 |
| Nozzle temp | | °C | 225-235 |
| Mold temp | | °C | 50-60 |
| Screw speed | | a.u. | 100 |
| Back pressure | | bar | 5 |

Physical measurements were made using the following test methods. Before testing, the pellets were pre-dried at 120°C for 3 hours.

Heat deflection temperature (HDT) was determined in accordance with ISO 75 on a sample plaque of 4.00 mm thickness at 0.45 MPa and 1.82 MPa.

Notched Izod impact Strength (INI) was determined in accordance with ISO 180 under a load of 5.5 lbf at a temperature of 23°C on 80 x 10 x 4 mm bars.

Melt volume rate (MVR) was determined in accordance with ISO1133 under a load of 2.16 kg at 240 °C with a dwell time of 300 or 900 seconds.

Tensile properties were measured in accordance with ISO 527 at 50 mm/min at a temperature of 23 °C on standard ISO tensile bars.

Notched and unnotched Charpy impact strength was determined in accordance with ISO 179/1 at 23°C using a 4.2 Joule pendulum on 80 x 10 x 4 mm bars.

Multiaxial impact (MAI) testing was performed in accordance with ISO 6602 at 23°C. Hardness was determined using an Erichsen scratch test at 2N.

Pencil hardness was determined in accordance with ASTM D3363 at 0.75 Kgf. The hardness is reported as the hardness of the hardest pencil that did not scratch the surface. The pencil hardness scale from softer to harder is 2B, B, HB, F, H, 2H, 3H, etc.

Scratch whitening tests were carried out on molded plaques. Three scratches were generated on the plaques at 1.55N, 2N and 4N. The surface of the plaque was visually inspected for signs of scratch-whitening. Scratch-whitening is defined as a white line or color change visible (by eye) at all angles. Rating 1 is given when no visible white line/color change is present at 1.55N, 2N, and 4N at all angles. Rating 2 is given when a white line/color change is visible at 4N but not at 2N and 1.55N at all angles. Rating 3 is given when a white line/color change is visible at 2N and 4N but not at 1.55N at all angles. Rating 4 is given when a white line/color change is visible at all angles at 1.55N, 2N, and 4N. Vicat softening temperature was determined in accordance with ISO 306.

Compositions and results are shown in Table 4. In Table 4, the amount of each component is provided in weight percent, based on the total weight of the composition.

**Table 4**

| Component | Units | E1 | CE1 | CE2 |
|---|---|---|---|---|
| PCSi | wt% | 22.5 | 22.5 | 22.5 |
| HHPMMA-1 | wt% | 76.5 | | |
| HHPMMA-2 | wt% | | 76.5 | |
| HHPMMA-3 | wt% | | | 76.5 |
| Properties | | | | |
| Charpy Impact, notched | kJ/m² | 7 | 5 | 2 |
| Charpy Impact, un-notched | kJ/m² | 53 | 22 | 20 |
| INI | kJ/m² | 8 | 7 | 4 |
| Tensile Modulus | MPa | 2700 | 2500 | 3000 |
| Tensile Stress at Yield, | MPa | 63 | 61 | |
| Tensile Stress at Break, | MPa | 57 | 51 | 63 |
| Tensile Strain at Yield | % | 4 | 4 | - |
| MAI, Puncture energy | J | 10 | 5 | 2 |
| MAI, Energy at max force | J | 8 | 5 | 1 |
| MAI, Deflection at break, | mm | 7 | 5 | 4 |
| Erichsen scratch test | N/mm² | 466 | 425 | 402 |
| Pencil hardness | - | 2H | 2H | F |
| Scratch whitening | - | 4 | 4 | 4 |
| HDT, 0.45 MPa | °C | 108 | 103 | 132 |
| HDT, 1.8 MPa | °C | 93 | 87 | 118 |
| MVR, 300 s | Cm³/10 min | 1 | 2 | 0.5 |
| MVR, 900 s | cm³/10 min | 1 | 2 | 0 |
| Vicat | °C | 115 | 111 | 138 |

As shown in Table 4, the composition of E1 exhibited a desirable combination of mechanical and thermal properties as well as good scratch resistance. The composition of CE1 showed a reduced Charpy impact strength (notched), and the composition of CE2 exhibited both a reduced Charpy impact (notched) and pencil hardness relative to E1.

The composition of E1 was further compared to a poly(methyl methacrylate)/poly(carbonate-siloxane) composition comprising 22.5 wt% of PCSi and 76.5 wt% poly(methyl methacrylate) homopolymer blend (shown as CE3) and a poly(methyl methacrylate)/acrylonitrile-styrene-acrylate (ASA) commercial blend (shown as CE4). The results are shown in Table 5. Table 5 shows that the composition of E1 exhibited a higher Charpy impact (notched) and MAI puncture energy, as well as significantly higher HDT, while also exhibiting excellent hardness by both the Erichsen hardness and pencil hardness test relative to the composition of CE4. The composition of E1 also showed comparable mechanical and scratch resistance properties and a significantly higher HDT relative to the composition of CE3.

**Table 5**

| Test | Unit | E1 | CE3 | CE4 |
|---|---|---|---|---|
| Charpy Impact, notched | kJ/m² | 7 | 9 | 5 |
| Tensile Modulus | MPa | 2700 | 2400 | 2400 |
| HDT, 1.8 MPa | °C | 93 | 73 | 77 |
| Erichsen scratch test, 2N | N/mm² | 466 | 402 | 425 |
| Pencil hardness | - | 2H | 2H | 2H |
| Scratch visibility | - | 4 | 4 | 4 |

This disclosure further encompasses the following aspects:

In an aspect, the composition can comprise 55 to 90 weight percent of a methacrylate copolymer comprising repeating units derived from 50 to 99 weight percent, based on the total weight of the copolymer, of a (C₁₋₁₀ alkyl) methacrylate; 0.5 to 20 weight percent, based on the total weight of the copolymer, of maleic anhydride, fumaric anhydride, maleimide, or a combination thereof; and 0.5 to 40 weight percent, based on the total weight of the methacrylate copolymer, of a substituted or unsubstituted alkenyl aromatic monomer; and 10 to 30 weight percent of a poly(carbonate-siloxane) having a siloxane content of 30 to 70 weight percent, preferably 35 to 65 weight percent, based on the total weight of the poly(carbonate-siloxane); wherein the weight percent of each component is based on the total weight of the composition. A molded sample of the composition according to this aspect can exhibit one or more of: a notched Charpy impact strength of greater than 6 kJ/m², preferably 7 kJ/m² to 12 kJ/m² at 23 °C, 4.2 J, as measured in accordance with ISO 179/1; a notched Izod impact strength of greater than 7 kJ/m², preferably 8 kJ/m² to 11 kJ/m² at 23 °C, 2.75 J, as measured in accordance with ISO 180; a hardness of greater than 400 N/mm², preferably 430 N/mm² to 550 N/mm², as measured in accordance with the Erichsen scratch hardness test at a force of 2 Newton (N); a pencil hardness as specified by D3363 - 92A of at least H; and a heat deflection temperature of at least 90°C, determined in accordance with ISO 75 on a sample plaque of 4.00 mm thickness at 1.8 MPa.

In another aspect, the composition comprises 55 to 90 weight percent of the methacrylate copolymer comprising repeating units derived from 50 to 99 weight percent, based on the total weight of the copolymer, of a (C₁₋₁₀ alkyl) methacrylate; 0.5 to 20 weight percent, based on the total weight of the copolymer, of maleic anhydride, fumaric anhydride, maleimide, or a combination thereof; and 0.5 to 40 weight percent, based on the total weight of the methacrylate copolymer, of a substituted or unsubstituted alkenyl aromatic monomer; and 10 to 30 weight percent of a poly(carbonate-siloxane) having a siloxane content of 30 to 70 weight percent, preferably 35 to 65 weight percent, based on the total weight of the poly(carbonate-siloxane); wherein the weight percent of each component is based on the total weight of the composition; wherein the copolymer can comprise repeating units derived from methyl methacrylate, maleic anhydride, and styrene; said repeating units being derived from 70 to 80 weight percent methyl methacrylate; 10 to 20 weight percent styrene; and 5 to 15 weight percent maleic anhydride.

In an aspect, the composition comprises 55 to 90 weight percent of a methacrylate copolymer comprising repeating units derived from 50 to 99 weight percent, based on the total weight of the copolymer, of a (C₁₋₁₀ alkyl) methacrylate; 0.5 to 20 weight percent, based on the total weight of the copolymer, of maleic anhydride, fumaric anhydride, maleimide, or a combination thereof; and 0.5 to 40 weight percent, based on the total weight of the methacrylate copolymer, of a substituted or unsubstituted alkenyl aromatic monomer; and 10 to 30 weight percent of a poly(carbonate-siloxane) having a siloxane content of 30 to 70 weight percent, preferably 35 to 65 weight percent, based on the total weight of the poly(carbonate-siloxane); wherein the weight percent of each component is based on the total weight of the composition; optionally wherein the poly(carbonate-siloxane) can comprise bisphenol A carbonate repeating units and poly(dimethyl siloxane) repeating units; and/or optionally wherein the poly(carbonate-siloxane) can have a weight average molecular weight of 21,000 to 50,000 g/mol, or 25,000 to 45,000 g/mol, or 30,000 to 45,000 g/mol, or 32,000 to 43,000 g/mol, or 35,000 to 40,000 g/mol, as determined by gel permeation chromatography using a crosslinked styrene-divinyl benzene column, at a sample concentration of 1 milligram per milliliter, calibrated using polystyrene standards and calculated for polycarbonate; and/or optionally wherein the composition can be free of a poly(carbonate-siloxane) having a siloxane content that is less than 30 weight percent, or wherein the composition can be free of a poly(carbonate-siloxane) having a siloxane content that is less than 20 weight percent, or wherein the composition can be free of a poly(carbonate-siloxane) having a siloxane content that is less than 10 weight percent, each based on the total weight of the polycarbonate siloxane.

In another aspect, the composition comprises 55 to 90 weight percent of a methacrylate copolymer comprising repeating units derived from 50 to 99 weight percent, based on the total weight of the copolymer, of a (C1-10 alkyl) methacrylate; 0.5 to 20 weight percent, based on the total weight of the copolymer, of maleic anhydride, fumaric anhydride, maleimide, or a combination thereof; and 0.5 to 40 weight percent, based on the total weight of the methacrylate copolymer, of a substituted or unsubstituted alkenyl aromatic and 10 to 30 weight percent of a poly(carbonate-siloxane) having a siloxane content of 30 to 70 weight percent, preferably 35 to 65 weight percent, based on the total weight of the poly(carbonate-siloxane); wherein the weight percent of each component is based on the total weight of the composition; wherein one or more components of the composition can be derived from post-consumer recycled or post-industrial recycled materials or can be produced from at least one monomer derived from bio-based or plastic waste feedstock; and/or wherein the composition can further comprise 0.1 to 10 weight percent, based on the total weight of the polycarbonate composition, of an additive composition.

In an aspect, a composition can comprise 55 to 90 weight percent of a methacrylate copolymer comprising repeating units derived from 50 to 99 weight percent, based on the total weight of the copolymer, of a (C1-10 alkyl) methacrylate; 0.5 to 20 weight percent, based on the total weight of the copolymer, of maleic anhydride, fumaric anhydride, maleimide, or a combination thereof; and 0.5 to 40 weight percent, based on the total weight of the methacrylate copolymer, of a substituted or unsubstituted alkenyl aromatic monomer; and 10 to 30 weight percent of a poly(carbonate-siloxane) having a siloxane content of 30 to 70 weight percent, preferably 35 to 65 weight percent, based on the total weight of the poly(carbonate-siloxane); wherein the weight percent of each component is based on the total weight of the composition; wherein the composition can further comprise 1 to 5 weight percent of a linear low density polyethylene, based on the total weight of the composition; and/or optionally can further comprise 10 to 35 weight percent of an impact modifier, preferably a multilayered impact modifier, based on the total weight of the composition.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein, and may or may not be present in other aspects. The term "combination thereof" as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A composition comprising
55 to 90 weight percent of
a methacrylate copolymer comprising repeating units derived from
50 to 99 weight percent, based on the total weight of the copolymer, of a (C₁₋₁₀ alkyl) methacrylate;
0.5 to 20 weight percent, based on the total weight of the copolymer, of maleic anhydride, fumaric anhydride, maleimide, or a combination thereof; and
0.5 to 40 weight percent, based on the total weight of the copolymer, of a substituted or unsubstituted alkenyl aromatic monomer;
and
10 to 30 weight percent of a poly(carbonate-siloxane) having a siloxane content of 30 to 70 weight percent, preferably 35 to 65 weight percent, based on the total weight of the poly(carbonate-siloxane);
wherein the weight percent of each component is based on the total weight of the composition.

2. The composition of claim 1, wherein a molded sample of the composition exhibits one or more of:
a notched Charpy impact strength of greater than 5 kJ/m², preferably 7 kJ/m² to 12 kJ/m² at 23 °C, 4.2 J, as measured in accordance with ISO 179/1;
a notched Izod impact strength of greater than 7 kJ/m², preferably 8 kJ/m² to 11 kJ/m² at 23 °C, 2.75 J, as measured in accordance with ISO 180;
a hardness of greater than 400 N/mm², preferably 430 N/mm² to 550 N/mm², as measured in accordance with the Erichsen scratch hardness test at a force of 2 Newton (N);
a pencil hardness as specified by D3363 - 92A of at least H; and
a heat deflection temperature of at least 90°C, determined in accordance with ISO 75 on a sample plaque of 4.00 mm thickness at 1.8 MPa.

3. The composition of claims 1 or 2, wherein the copolymer comprises repeating units derived from methyl methacrylate, maleic anhydride, and styrene.

4. The composition of any of claims 1 to 3, wherein the copolymer comprises repeating units derived from
70 to 80 weight percent methyl methacrylate;
10 to 20 weight percent styrene; and
5 to 15 weight percent maleic anhydride;
wherein weight percent is based on the total weight of the copolymer.

5. The composition of any of claims 1 to 4, wherein the poly(carbonate-siloxane) comprises bisphenol A carbonate repeating units and poly(dimethyl siloxane) repeating units.

6. The composition of any of claims 1 to 5, wherein the poly(carbonate-siloxane) has a weight average molecular weight of 21,000 to 50,000 g/mol, or 25,000 to 45,000 g/mol, or 30,000 to 45,000 g/mol, or 32,000 to 43,000 g/mol, or 35,000 to 40,000 g/mol, as determined by gel permeation chromatography using a crosslinked styrene-divinyl benzene column, at a sample concentration of 1 milligram per milliliter, calibrated using polystyrene standards and calculated for polycarbonate.

7. The composition of any of claims 1 to 6, wherein the composition is free of a poly(carbonate-siloxane) having a siloxane content that is less than 30 weight percent, or wherein the composition is free of poly(carbonate-siloxane) having a siloxane content that is less than 20 weight percent, or wherein the composition is free of poly(carbonate-siloxane) having a siloxane content that is less than 10 weight percent, each based on the total weight of the polycarbonate siloxane.

8. The composition of any of claims 1 to 7, wherein one or more components of the composition is derived from post-consumer recycled or post-industrial recycled materials or can be produced from at least one monomer derived from bio-based or plastic waste feedstock.

9. The composition of any of claims 1 to 8, wherein the composition further comprises 0.1 to 10 weight percent, based on the total weight of the polycarbonate composition, of an additive composition.

10. The composition of any of claims 1 to 9, comprising
70 to 80 weight percent of the copolymer; and
20 to 30 weight percent of the poly(carbonate-siloxane).

11. The composition of claim 10, wherein
the copolymer comprises repeating units derived from
70 to 80 weight percent methyl methacrylate;
10 to 20 weight percent styrene; and
5 to 15 weight percent maleic anhydride;
wherein weight percent is based on the total weight of the copolymer;
the poly(carbonate-siloxane) comprises bisphenol A carbonate repeating units and poly(dimethyl siloxane) repeating units;
the poly(carbonate-siloxane) has a weight average molecular weight of 25,000 to 45,000 g/mol;
the poly(carbonate-siloxane) has a siloxane content of 35 to 65 weight percent based on the total weight of the poly(carbonate-siloxane); and
wherein a molded sample of the composition exhibits
a notched Charpy impact strength of greater than 5 kJ/m², preferably 7 kJ/m² to 12 kJ/m² at 23 °C, 4.2 J, as measured in accordance with ISO 179/1; and
a notched Izod impact strength of greater than 7 kJ/m², preferably 8 kJ/m² to 11 kJ/m² at 23 °C, 2.75 J, as measured in accordance with ISO 180; and
a hardness of greater than 400 N/mm², preferably 430 N/mm² to 550 N/mm², as measured in accordance with the Erichsen scratch hardness test at a force of 2 Newton (N); and
a pencil hardness as specified by D3363 - 92A of at least H; and
a heat deflection temperature of at least 90°C, determined in accordance with ISO 75 on a sample plaque of 4.00 mm thickness at 1.8 MPa.

12. A method of making the composition of any of claims 1 to 11, the method comprising melt-mixing the components of the composition, and, optionally, extruding the composition.

13. An article comprising the composition of any of claims 1 to 11.

14. The article of claim 13, wherein the article is an automotive component or a consumer electronic component.

## Patentansprüche

1. Zusammensetzung, umfassend
55 bis 90 Gewichtsprozent eines Methacrylat-Copolymers, das sich wiederholende Einheiten umfasst, die abgeleitet sind von
50 bis 99 Gewichtsprozent, bezogen auf das Gesamtgewicht des Copolymers, eines (C₁-₁₀-Alkyl)methacrylats;
0,5 bis 20 Gewichtsprozent, bezogen auf das Gesamtgewicht des Copolymers, Maleinsäureanhydrid, Fumarsäureanhydrid, Maleimid oder einer Kombination davon; und
0,5 bis 40 Gewichtsprozent, bezogen auf das Gesamtgewicht des Copolymers, eines substituierten oder unsubstituierten alkenylaromatischen Monomers;
und
10 bis 30 Gewichtsprozent eines Poly(carbonat-siloxans) mit einem Siloxangehalt von 30 bis 70 Gewichtsprozent, vorzugsweise 35 bis 65 Gewichtsprozent, bezogen auf das Gesamtgewicht des Poly(carbonat-siloxan)
wobei die Gewichtsprozente jeder Komponente auf das Gesamtgewicht der Zusammensetzung bezogen ist.

2. Zusammensetzung nach Anspruch 1, wobei eine geformte Probe der Zusammensetzung eines oder oder mehrere aufweist von:
eine Kerbschlagzähigkeit nach Charpy von mehr als 5 kJ/m², vorzugsweise 7 kJ/m² bis 12 kJ/m² bei 23 °C, 4,2 J, gemessen gemäß ISO 179/1;
eine Izod-Kerbschlagzähigkeit von mehr als 7 kJ/m², vorzugsweise 8 kJ/m² bis 11 kJ/m² bei 23 °C, 2,75 J, gemessen gemäß ISO 180;
eine Härte von mehr als 400 N/mm², vorzugsweise 430 N/mm² bis 550 N/mm², gemessen gemäß dem Erichsen-Kratzfestigkeitstest bei einer Kraft von 2 Newton (N);
eine Bleistifthärte gemäß D3363 - 92A von mindestens H; und
eine Wärmeformbeständigkeitstemperatur von mindestens 90 °C, bestimmt gemäß ISO 75 an einer Probeplatte mit einer Dicke von 4,00 mm bei 1,8 MPa.

3. Zusammensetzung nach Anspruch 1 oder 2, wobei das Copolymer sich wiederholende Einheiten umfasst, die von Methylmethacrylat, Maleinsäureanhydrid und Styrol abgeleitet sind.

4. Die Zusammensetzung nach einem der Ansprüche 1 bis 3, wobei das Copolymer sich wiederholende Einheiten umfasst Einheiten, die abgeleitet sind von
70 bis 80 Gewichtsprozent Methylmethacrylat;
10 bis 20 Gewichtsprozent Styrol; und
5 bis 15 Gewichtsprozent Maleinsäureanhydrid;
wobei die Gewichtsprozente auf das Gesamtgewicht des Copolymers bezogen sind.

5. Zusammensetzung nach einem der Ansprüche 1 bis 4, wobei das Poly(carbonat-siloxan) Bisphenol-A-carbonat-Wiederholungseinheiten und Poly(dimethylsiloxan)-Wiederho-lungs-einheiten umfasst.

6. Zusammensetzung nach einem der Ansprüche 1 bis 5, wobei das Poly(carbonat-siloxan) ein gewichtsmittleres Molekulargewichts von 21.000 bis 50.000 g/mol oder 25.000 bis 45.000 g/mol oder 30.000 bis 45.000 g/mol oder 32.000 bis 43.000 g/mol oder 35.000 bis 40.000 g/mol, bestimmt durch Gelpermeationschromatographie unter Verwendung einer vernetzten Styrol-Divinylbenzol-Säule bei einer Probenkonzentration von 1 Milligramm pro Milliliter, kalibriert unter Verwendung von Polystyrolstandards und berechnet für Polycarbonat.

7. Zusammensetzung nach einem der Ansprüche 1 bis 6, wobei die Zusammensetzung frei von einem Poly(carbonat-siloxan) mit einem Siloxangehalt von weniger als 30 Gewichtsprozent ist, oder wobei die Zusammensetzung frei von Poly(carbonat-siloxan) mit einem Siloxangehalt von weniger als 20 Gewichtsprozent ist, oder wobei die Zusammensetzung frei von Poly(carbonat-siloxan) mit einem Siloxangehalt von weniger als 10 Gewichtsprozent ist, jeweils bezogen auf das Gesamtgewicht des Polycarbonatsiloxans.

8. Zusammensetzung nach einem der Ansprüche 1 bis 7, wobei eine oder mehrere Komponenten der Zusammensetzung aus recycelten Post-Consumer- oder Post-Industrial-
Materialien erhalten werden oder
aus mindestens einem Monomer hergestellt werden können, das aus biobasierten oder Kunststoffabfall-Ausgangsmaterialien gewonnen wird.

9. Zusammensetzung nach einem der Ansprüche 1 bis 8, wobei die Zusammensetzung ferner 0,1 bis 10 Gewichtsprozent, bezogen auf das Gesamtgewicht der Polycarbonatzusammensetzung, einer Additivzusammensetzung umfasst.

10. Zusammensetzung nach einem der Ansprüche 1 bis 9, umfassend
70 bis 80 Gewichts-prozent des Copolymers; und
20 bis 30 Gewichtsprozent des Poly(carbonat-siloxans).

11. Zusammensetzung nach Anspruch 10, wobei das Copolymer wiederkehrende Einheiten umfasst, die abgeleitet sind von
70 bis 80 Gewichtsprozent Methylmethacrylat;
10 bis 20 Gewichtsprozent Styrol; und
5 bis 15 Gewichtsprozent Maleinsäureanhydrid;
wobei die Gewichtsprozente auf das Gesamtgewicht des Copolymers bezogen sind;
das Poly(carbonat-siloxan) sich wiederholende Einheiten aus Bisphenol-A-carbonat und sich wiederholende Einheiten aus Poly(dimethylsiloxan) umfasst;
das Poly(carbonat-siloxan) ein gewichtsmittleres Molekulargewicht von 25.000 bis 45.000 g/mol aufweist;
das Poly(carbonat-siloxan) einen Siloxangehalt von 35 bis 65 Gewichtsprozent, bezogen auf Gesamtgewicht des Poly(carbonat-siloxans) aufweist; und
wobei eine geformte Probe der Zusammensetzung aufweist
eine Kerbschlagzähigkeit nach Charpy von mehr als 5 kJ/m², vorzugsweise 7 kJ/m² bis 12 kJ/m² bei 23 °C, 4,2 J, gemessen gemäß ISO 179/1; und
eine Kerbschlagzähigkeit nach Izod von mehr als 7 kJ/m², vorzugsweise 8 kJ/m² bis 11 kJ/m² bei 23 °C, 2,75 J, gemessen gemäß ISO 180; und
eine Härte von mehr als 400 N/mm², vorzugsweise 430 N/mm² bis 550 N/mm², gemessen gemäß dem Erichsen-Kratzfestigkeitstest bei einer Kraft von 2 Newton (N); und
eine Bleistifthärte gemäß D3363 - 92A von mindestens H; und
eine Wärmeformbeständigkeitstemperatur von mindestens 90 °C, bestimmt gemäß ISO 75 an einer Probenplatte mit einer Dicke von 4,00 mm bei 1,8 MPa.

12. Verfahren zur Herstellung der Zusammensetzung nach einem der Ansprüche 1 bis 11, wobei das Verfahren das Schmelzmischen der Komponenten der Zusammensetzung und gegebenenfalls das Extrudieren der Zusammensetzung umfasst.

13. Gegenstand, der die Zusammensetzung nach einem der Ansprüche 1 bis 11 umfasst.

14. Gegenstand nach Anspruch 13, wobei der Gegenstand ein Automobilbauteil oder ein Unterhaltungselektronikbauteil ist.

## Revendications

1. Composition comprenant
55 à 90 % en poids de
un copolymère de méthacrylate comprenant des motifs répétitifs dérivés de
50 à 99 % en poids, par rapport au poids total du copolymère, d'un méthacrylate d'(alkyle en C₁ à C₁₀) ;
0,5 à 20 % en poids, par rapport au poids total du copolymère, d'anhydride maléique, d'anhydride fumarique, de maléimide, ou d'une combinaison de ceux-ci ; et
0,5 à 40 % en poids, par rapport au poids total du copolymère, d'un monomère alcényle aromatique substitué ou non substitué ;
et
10 à 30 % en poids d'un poly(carbonate-siloxane) ayant une teneur en siloxane de 30 à 70 % en poids, de préférence de 35 à 65 % en poids, par rapport au poids total du poly(carbonate-siloxane) ;
dans laquelle le pourcentage en poids de chaque composant est basé sur le poids total de la composition.

2. Composition selon la revendication 1, dans laquelle un échantillon moulé de la composition présente une ou plusieurs parmi :
une résistance au choc Charpy sur éprouvette entaillée supérieure à 5 kJ/m², de préférence de 7 kJ/m² à 12 kJ/m² à 23 °C, 4,2 J, telle que mesurée conformément à la norme ISO 179/1 ;
une résistance au choc Izod sur éprouvette entaillée supérieure à 7 kJ/m², de préférence de 8 kJ/m² à 11 kJ/m² à 23 °C, 2,75 J, telle que mesurée conformément à la norme ISO 180 ;
une dureté supérieure à 400 N/mm², de préférence de 430 N/mm² à 550 N/mm², telle que mesurée conformément au test de dureté à la rayure Erichsen sous une force de 2 Newtons (N) ;
une dureté au crayon, telle que spécifiée par la norme D3363-92A, d'au moins H ; et
une température de déflexion thermique d'au moins 90 °C, déterminée conformément à la norme ISO 75 sur une plaque échantillon ayant une épaisseur de 4,00 mm sous 1,8 MPa.

3. Composition selon la revendication 1 ou 2, dans laquelle le copolymère comprend des motifs répétitifs dérivés de méthacrylate de méthyle, d'anhydride maléique, et de styrène.

4. Composition selon l'une quelconque des revendications 1 à 3, dans laquelle le copolymère comprend des motifs répétitifs dérivés de
70 à 80 % en poids de méthacrylate de méthyle ;
10 à 20 % en poids de styrène ; et
5 à 15 % en poids d'anhydride maléique ;
dans laquelle les pourcentages en poids sont basés sur le poids total du copolymère.

5. Composition selon l'une quelconque des revendications 1 à 4, dans laquelle le poly(carbonate-siloxane) comprend des motifs répétitifs de carbonate de bisphénol A et des motifs répétitifs de poly(diméthylsiloxane).

6. Composition selon l'une quelconque des revendications 1 à 5, dans laquelle le poly(carbonate-siloxane) a une masse moléculaire moyenne en masse de 21 000 à 50 000 g/mol, ou de 25 000 à 45 000 g/mol, ou de 30 000 à 45 000 g/mol, ou de 32 000 à 43 000 g/mol, ou de 35 000 à 40 000 g/mol, telle que déterminée par chromatographie par perméation de gel utilisant une colonne de styrène-divinylbenzène réticulé, à une concentration d'échantillon de 1 milligramme par millilitre, étalonnée au moyen d'étalons de polystyrène et calculée pour le polycarbonate.

7. Composition selon l'une quelconque des revendications 1 à 6, dans laquelle la composition est exempte de poly(carbonate-siloxane) ayant une teneur en siloxane inférieure à 30 % en poids, ou dans laquelle la composition est exempte de poly(carbonate-siloxane) ayant une teneur en siloxane inférieure à 20 % en poids, ou dans laquelle la composition est exempte de poly(carbonate-siloxane) ayant une teneur en siloxane inférieure à 10 % en poids, dans chaque cas par rapport au poids total du poly(carbonate-siloxane).

8. Composition selon l'une quelconque des revendications 1 à 7, dans laquelle un ou plusieurs composants de la composition dérivent de matériaux recyclés post-consommation ou recyclés post-industriels, ou peuvent être produits à partir d'au moins un monomère dérivé d'une matière première de déchets plastiques ou d'origine biologique.

9. Composition selon l'une quelconque des revendications 1 à 8, dans laquelle la composition comprend en outre 0,1 à 10 % en poids, par rapport au poids total de la composition de polycarbonate, d'une composition d'additifs.

10. Composition selon l'une quelconque des revendications 1 à 9, comprenant
70 à 80 % en poids du copolymère ; et
20 à 30 % en poids du poly(carbonate-siloxane).

11. Composition selon la revendication 10, dans laquelle
le copolymère comprend des motifs répétitifs dérivés de
70 à 80 % en poids de méthacrylate de méthyle ;
10 à 20 % en poids de styrène ; et
5 à 15 % en poids d'anhydride maléique ;
dans laquelle les pourcentages en poids sont basés sur le poids total du copolymère ;
le poly(carbonate-siloxane) comprend des motifs répétitifs de carbonate de bisphénol A et des motifs répétitifs de poly(diméthylsiloxane) ;
le poly(carbonate-siloxane) a une masse moléculaire moyenne en masse de 25 000 à 45 000 g/mol ;
le poly(carbonate-siloxane) a une teneur en siloxane de 35 à 65 % en poids par rapport au poids total du poly(carbonate-siloxane) ; et
dans laquelle un échantillon moulé de la composition présente
une résistance au choc Charpy sur éprouvette entaillée supérieure à 5 kJ/m², de préférence de 7 kJ/m² à 12 kJ/m² à 23 °C, 4,2 J, telle que mesurée conformément à la norme ISO 179/1 ; et
une résistance au choc Izod sur éprouvette entaillée supérieure à 7 kJ/m², de préférence de 8 kJ/m² à 11 kJ/m² à 23 °C, 2,75 J, telle que mesurée conformément à la norme ISO 180 ; et
une dureté supérieure à 400 N/mm², de préférence de 430 N/mm² à 550 N/mm², telle que mesurée conformément au test de dureté à la rayure Erichsen sous une force de 2 Newtons (N) ; et
une dureté du crayon, telle que spécifiée par la norme D3363-92A, d'au moins H ; et
une température de déflexion thermique d'au moins 90 °C, déterminée conformément à la norme ISO 75 sur une plaque échantillon ayant une épaisseur de 4,00 mm sous 1,8 MPa.

12. Méthode de production de la composition selon l'une quelconque des revendications 1 à 11, la méthode comprenant le mélange à l'état fondu des composants de la composition, et éventuellement l'extrusion de la composition.

13. Article comprenant la composition selon l'une quelconque des revendications 1 à 11.

14. Article selon la revendication 13, dans lequel l'article est un composant d'automobile ou un composant électronique de consommation.
